# EUROPEAN PATENT APPLICATION

(11) **EP 2 335 961 A1**
(43) Date of publication of application: **22.06.2011**
(21) Application number: 09180216.5
(22) Date of filing: 21.12.2009
(51) Int. Cl.: B60K 5/08, B60K 7/00

(54) **Improved automotive vehicle with two independent motorized driving units associated with two driving wheels**

(71) Applicant: Renault s.a.s., 92100 Boulogne Billancourt (FR)
(72) Inventor: Foulquier, Jacques, 72000 Le Mans (FR)

(57) **Abstract**

The invention proposes an automotive vehicle moved by two transversally aligned rear wheels (12), each rear wheel (12) being driven by an associated motorized driving unit (MDU) rotatably connected to the associated rear wheel drive shaft, each motorized driving unit (MDU) comprising an engine unit (EU) having an output rotating shaft (18); a continuously variable transmission unit (CVTU) having a unit input shaft (26) rotatably connected to said engine unit output shaft (18), and a unit output shaft (28) rotatably connected to the associated rear wheel drive shaft (38).

## Description

### BACKGROUND OF THE INVENTION

The present invention generally relates to an automotive vehicle, for instance a passenger vehicle, and more particularly to the arrangement of the rear drive train of such a vehicle.

### PRIOR ART

Many known vehicles propose a design of the rear driving train of a vehicle which is bulky and heavy, which does not provide with easy maneuverability, and which does not offer various possibilities for the implementation of the engine and of the other components of the mechanical transmission and drive train.

### SUMMARY OF THE INVENTION

The invention proposes an automotive vehicle moved by two transversally aligned rear wheels both rotating around a common geometrical transversal axis of rotation A1, each rear wheel being driven by an associated motorized driving unit rotatably connected to the associated rear wheel drive shaft, each motorized driving unit comprising an engine unit having an output rotating shaft, and a continuously variable transmission unit having a continuously variable transmission unit input shaft rotatably connected to said engine unit output shaft, and a continuously variable transmission unit output shaft rotatably connected to the associated rear wheel drive shaft.

According to one aspect of the invention, the continuously variable transmission unit can be a belt type continuously variable transmission unit which extends longitudinally.

According to another aspect of the invention, the continuously variable transmission unit output and input shafts of the continuously variable transmission unit both extend transversally, and both extend from the same side of the continuously variable transmission unit towards the associated rear wheel.

The continuously variable transmission unit output and input shafts of the continuously variable transmission unit can both extend transversally, and can extend from opposite sides of the continuously variable transmission unit, respectively towards the associated rear wheel and away from the associated rear wheel.

According to yet another aspect of the invention, a clutch can be interposed between the continuously variable transmission unit output shaft and the associated rear wheel drive shaft.

The clutch can be a centrifugal clutch.

According to another aspect of the invention, the engine unit can comprise a combustion engine, preferably a single cylinder combustion engine.

The engine unit output shaft can rotate around a transversal axis.

The motorized driving units can comprise a final additional gear reduction unit which is interposed between the continuously variable transmission unit output shaft and the associated rear wheel drive shaft.

According to another aspect of the invention, the vehicle can comprise a single engine unit which is common to the two motorized driving units.

According to a further aspect, the vehicle can comprise a single a single clutch which is common to the two motorized driving units.

Yet, the vehicle can have each motorized driving unit arranged in a rear space of the vehicle, between the rear wheels of the vehicle, said rear space being delimited by a vertical and transversal front plane P1, a vertical and rear plane P2 that extends at the rear end of the vehicle, a horizontal upper plane P3 and the ground plane GP.

Moreover, the geometrical transversal rotation axis A1 of the rear wheels can be positioned in said rear space of the vehicle.

The geometrical transversal rotation axis A1 of the rear wheels can also be positioned, in said rear space, rearward with respect to a vertical and transversal plane P4 that extends through the rear end of a transversally extending seat.

According to a further aspect, the engine unit can be positioned longitudinally ahead of the geometrical transversal rotation axis A1 of the rear wheels.

The engine unit can also be positioned longitudinally behind of the geometrical transversal rotation axis A1 of the rear wheels.

The geometrical transversal rotation axis A1 of the rear wheels can extend through the engine unit.

According to another aspect, each rear wheel can be suspended by means of an associated suspension device comprising at least a longitudinally extending suspension arm.

### BRIEF DESCRIPTION OF THE DRAWINGS

Numerous features and advantages of the present invention will become readily apparent from the following detailed description of various embodiments and variants of the invention, given by way of example but not exclusively, for the understanding of which reference is made to the appended drawings in which:
- figure 1 is a schematic representation of a first embodiment of two independent motorized driving units associated with rear driven wheels of a vehicle according to the invention;
- figure 2 is a schematic perspective rear view of the main parts and components located at the rear end part of a first embodiment of a vehicle according to the invention equipped with the two motorized driving units of figure 1 ;
- figure 3 is an underside view of the rear end part of the vehicle illustrated at figure 2;
- figure 4 is a view in cross section along line 4-4 of figure 3 (corresponding to the plane of symmetry VMP) ;
- figures 5 to 7 are views similar to those of figures 2 to 4 which illustrate a variant of the first embodiment of the invention illustrated in figures 1 to 4;
- figure 8 is a view similar to the one of figure 1 illustrating a second embodiment of two independent motorized driving units associated with rear driven wheels of a vehicle according to the invention;
- figures 9 to 11 are views similar to those of figures 2 to 4 which correspond to the implementation in the vehicle of the two motorized driving units according to the second embodiment;
- figure 12 is a view similar to the one of figure 1 illustrating a third embodiment of two independent motorized driving units associated with rear driven wheels of a vehicle according to the invention;
- figures 13 to 15 are views similar to those of figures 2 to 4 which correspond to the implementation in the vehicle of the two motorized driving units according to the third embodiment;
- figure 16 is a view similar to the one of figure 1 illustrating a fourth embodiment of two motorized driving units associated with rear driven wheels of a vehicle according to the invention;
- figures 17 to 19 are views similar to those of figures 2 to 4 which correspond to the implementation in the vehicle of the two motorized driving units according to the fourth embodiment;
- figures 20 to 23 are views similar to those of figures 16 to 19 which illustrate a variant of the fourth embodiment;
- figure 24 is a view similar to the one of figure 1 illustrating a fifth embodiment of two motorized driving units associated with rear driven wheels of a vehicle according to the invention;
- figures 25 to 27 are views similar to those of figures 2 to 4 which correspond to the implementation in the vehicle of the two motorized driving units according to the fifth embodiment;
- figures 28 to 31 are views similar to those of figures 24 to 31 which illustrate a variant of the fifth embodiment;
- figure 32 is a view similar to the one of figure 1 illustrating a sixth embodiment of two motorized driving units associated with rear driven wheels of a vehicle according to the invention;
- figures 33 to 35 are views similar to these of figures 2 to 4 which correspond to the implementation in the vehicle of the two motorized driving units according to the sixth embodiment;
- figure 36 is a view similar to the one of figure 32 illustrating a variant of the engine unit of the sixth embodiment.

### DETAILED DESCRIPTION OF THE DRAWINGS

In the description that follows, we will use, in a non limiting manner and with reference to the gravity, the terms vertical, horizontal, longitudinal, transversal, with particular reference to the axis V, L, T of the trihedron shown in the figures.

In the description, all identical, similar or analogous components or parts or assemblies or sub-assemblies will be designated by the same numeral or alphabetical references indicated in the drawings.

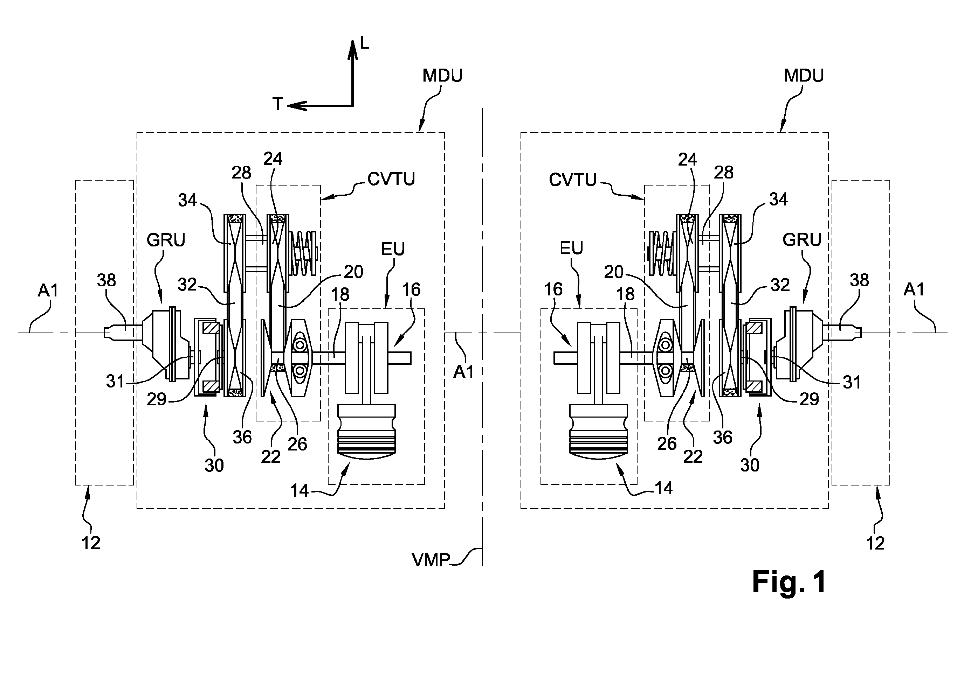

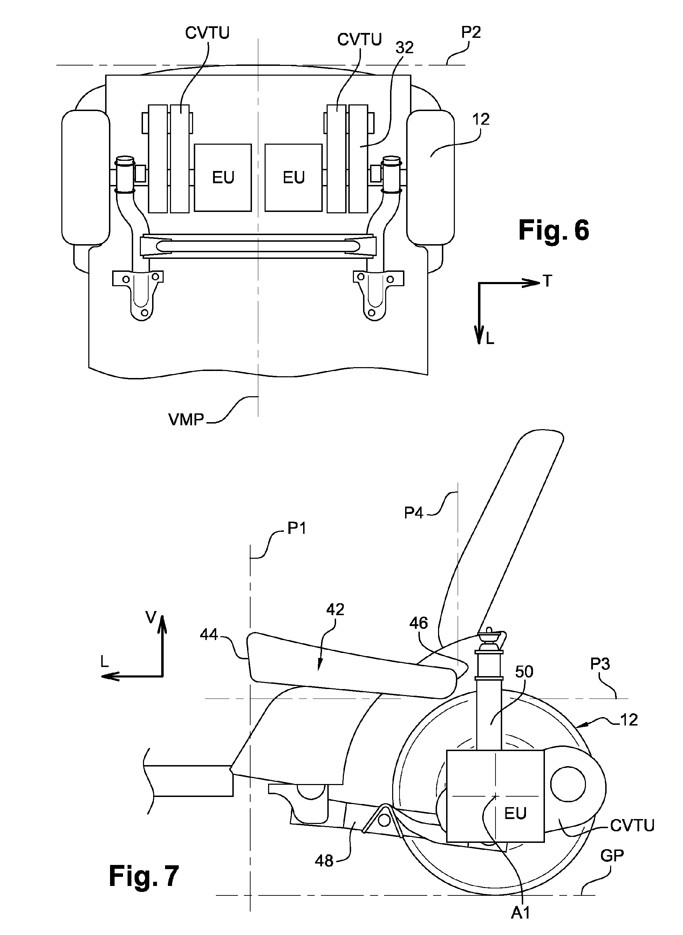

First embodiment - Figures 1 to 7: Two independent motorized driving units, two central engine units, engine units aligned on rear wheels axis, two optional additional gear reduction units, continuous variable transmission units extending forward.

Figure 1 illustrates a first embodiment of two independent motorized driving units MDU, left and right, for driving in rotation the two opposed rear wheels 12 around a transversal geometrical axis of rotation A1, which is here a common geometrical axis of rotation.

The two motorized driving units have an identical design and are symmetrical with respect to the vertical and longitudinal median plane VMP of the rear part of the vehicle equipped with the two rear wheels 12 and their two associated motorized driving units.

Each motorized driving unit comprises an engine unit EU which is here a single cylinder combustion engine 14 having a crankshaft 16, which rotates around an axis of rotation, which is transversal.

The crankshaft 16 comprises a rotating shaft 18 that, in the sense of the invention, is the power output shaft of the engine unit EU.

Each motorized driving unit also comprises a continuously variable transmission unit CVTU, which is here preferably a known belt type continuous variable transmission unit comprising a longitudinally extending belt 20, driven by an input pulley 22 and driving an output pulley 24.

Thus, globally, the continuous variable transmission unit extends longitudinally and substantially horizontally from the output shaft 18 towards the front of the vehicle, i.e. the output pulley 24 is located in front of the input pulley 22.

The continuous variable transmission unit comprises an input shaft 26, which is rotatably connected to the output shaft 18 of the engine unit, and an output shaft 28.

The continuous variable transmission unit input shaft 26 extends transversally from one side of the continuous variable transmission unit towards the engine unit EU and the continuous variable transmission unit output shaft 28 extends transversally from the other opposite side of the continuous variable transmission unit towards the associated wheel 12.

Due to this arrangement, the two engine units EU are adjacent and centrally located between the two continuous variable transmission units CVTU, i.e., each continuous variable transmission unit is transversally, laterally, arranged between the associated engine unit EU and the associated rear wheel 12.

Each motorized driving unit also comprises a clutch 30 which is here preferably a known centrifugal clutch which rotates around a transversal axis and which is operatively interposed between the output shaft 28 of the continuous variable transmission unit and the associated rear wheel 12.

More precisely, the input shaft of the clutch 30 is indirectly rotatably connected to the continuous variable transmission unit output shaft 28 by means of a driving belt 32, which extends longitudinally in parallel with the belt 20 of the adjacent continuous variable transmission unit CVTU. This driving belt 32 cooperates with an input pulley 34 rotatably connected to the output shaft 28 of the continuous variable transmission unit and an output pulley 36 which is rotatably connected to the input shaft 29 of the centrifugal clutch 30.

Due to this provision of the additional driving belt 32, the output shaft 31 of the clutch 30 is longitudinally very close to the common transversal geometrical axis of rotation A1 of the rear wheels 12 and its axis of rotation is substantially coaxial with the axis of rotation of the output shaft 18 of the engine unit EU.

In this embodiment, and optionally, a final gear reduction unit GRU is operatively interposed between the clutch 30 and the associated wheel 12. To this end, the clutch output shaft 31 is the input shaft of the final gear reduction unit GRU, and the output shaft of the final gear reduction unit GRU is the drive shaft 38 of the associated wheel 12.

In combination with the provision of the driving belt 32, the design of the final gear reduction unit GRU also permits to have the common transversal geometrical axis of rotation A1 of the rear wheels 12 passing through the engine unit EU and here substantially aligned with the rotation axis of the output shaft 18 of the engine unit EU.

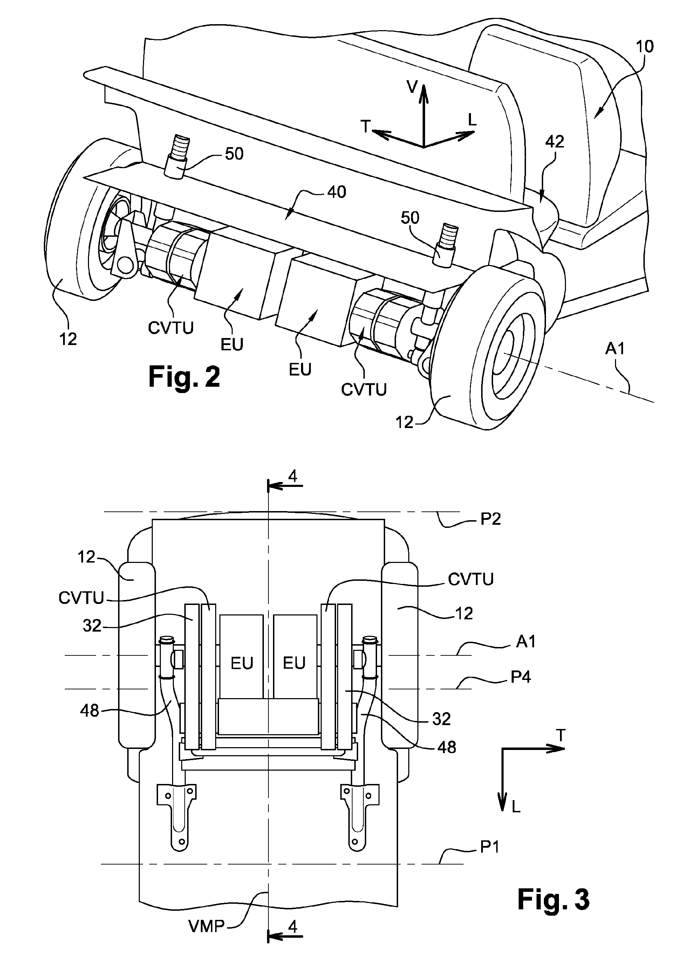

As illustrated in figures 2 to 4, the two facing continuous variable transmission units CVTU define a rear and longitudinal tunnel in which the two central engine units EU are arranged.

The two independent motorized driving units are arranged in a rear space of the vehicle, between the rear wheels 12 of the vehicle and under the rear floor 40 of the vehicle 10.

This rear space is delimited longitudinally by a vertical and transversal front plane P1, and by a vertical and transversal rear plane P2 that extends at the rear end of the vehicle.

This rear space extends vertically between a horizontal upper plane P3 which substantially corresponds to the plane of the rear floor 40, which extends under the rear transversal seat cushion 42 provided at the rear of the vehicle, and the ground plane GP on which the vehicle 10 moves.

It has also been illustrated a transversal and vertical plane P4 that passes through the rear end 46 of the rear seat cushion 42.

The plane P1 here substantially extends through the front end 44 of the rear seat cushion 42 which substantially corresponds to the front end of the rear floor 40.

The geometrical transversal rotation axis A1 of the rear wheels is positioned, in the rear space, slightly rearward with respect to the plane P4.

It can also be seen that each rear wheel is suspended by a suspension device including a longitudinally extending associated suspension arm 48 and an associated vertically extending shock absorber 50.

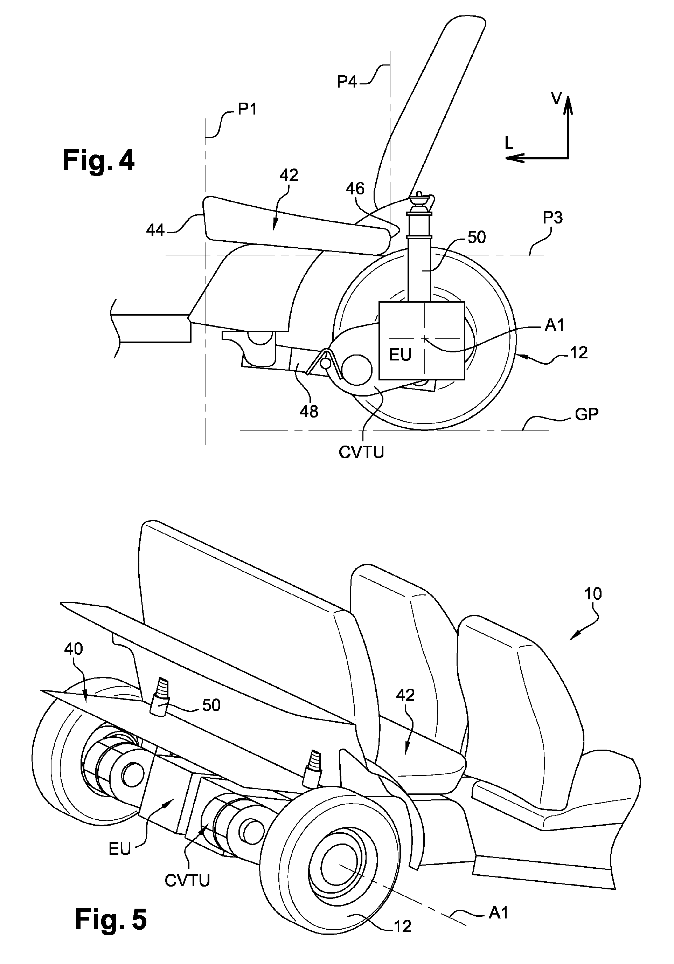

In the variant illustrated at figures 5 to 7, and when compared to figures 1 to 4, the two continuously variable transmission units extend longitudinally and towards the rear.

In the first embodiment and its variant, the final gear reduction units GRU are optional and can be omitted.

The first embodiment, which has just been described, provides with compactness in the vehicle design.

The design is more compact when the continuous variable transmission units CVTU can be located beneath the rear seat(s), thus reducing the total vehicle length.

The fixed ratio belt drive provides a slip-less and smooth reduction.

The use of low fuel consumption motorbike single or multicylinder engines provide overall reduced fuel consumption.

A possibility to switch off one of the two engines in low load conditions may improve the fuel efficiency.

Since this configuration has independent drive for each wheel, the vehicle has a low turning radius and shows no wheel dragging.

The manoeuvrability is easy.

The power transfer to the rear wheels is controlled only by centrifugal clutches and reduction gears on each wheel.

There is no need for a mechanical differential connected to the rear driving wheels for sharing the rotational speed.

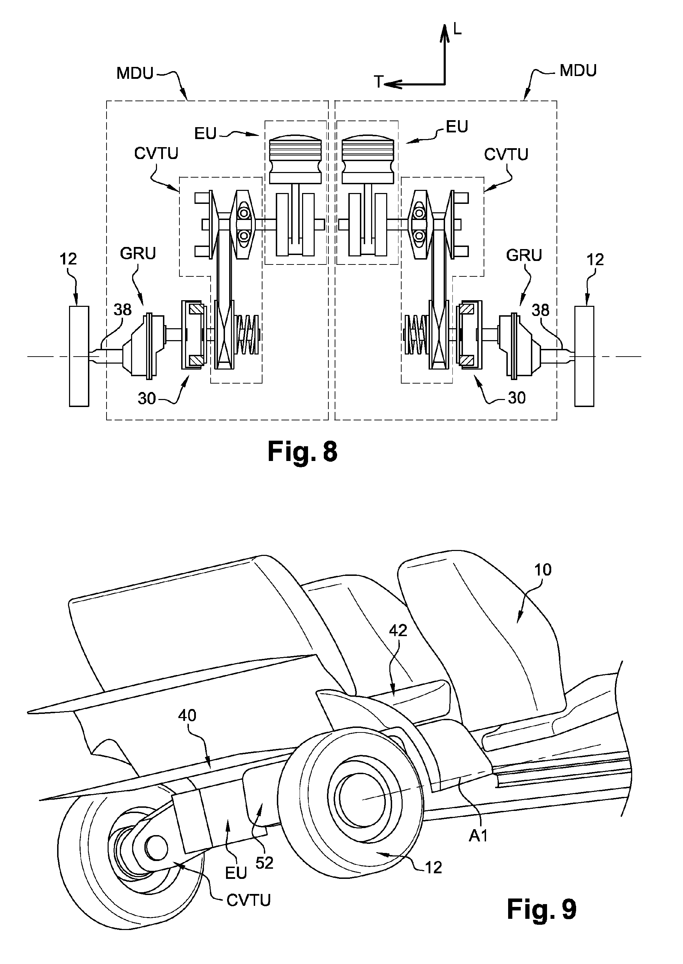

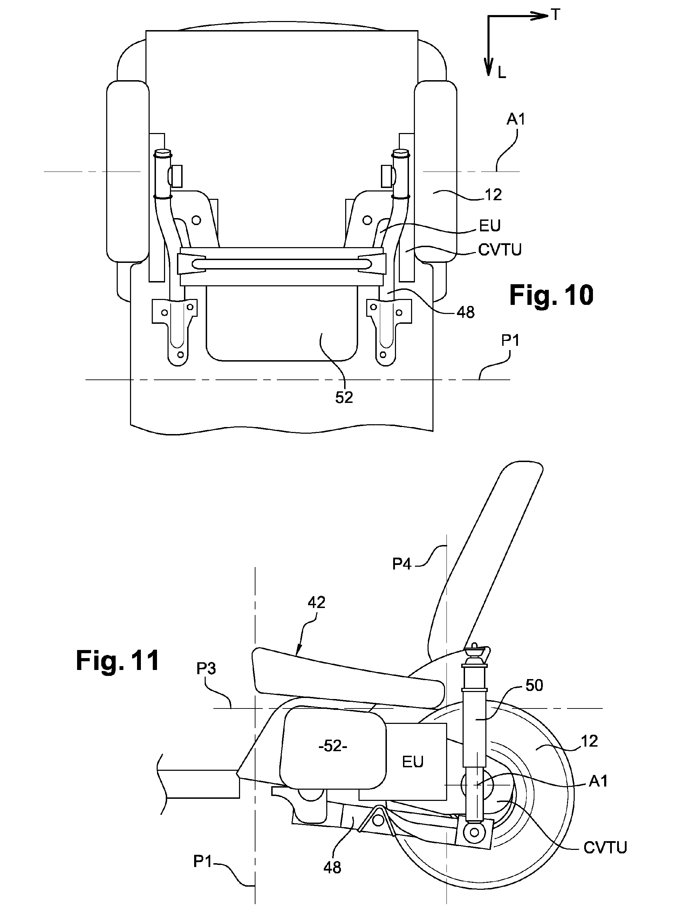

Second embodiment - Figures 8 to 11: Two independent motorized driving units, two central engine units, engine units arranged ahead of the geometrical transversal rotation axis of the rear wheels, two optional additional gear reduction units, continuous variable transmission units extending towards the rear.

When comparing figure 8 with figure 1, it can be seen that the only important structural and design difference is the suppression of the additional driving belts 32.

Consequently, the two continuous variable transmission units CVTU extend longitudinally and towards the rear.

The two adjacent and central engine units EU are thus positioned ahead of the geometrical transversal rotation axis A1 of the rear wheels 12 and the volume available transversally between the facing faces of the two engine units is increased.

The two engine units are thus totally in front of the A1 axis and are arranged entirely under the rear seat cushion 42.

The axis A1 is positioned, in said rear space, rearward with respect to the previously defined vertical and transversal plane P4.

A common fuel tank 52 is arranged transversally between the two engine units and under the seat cushion 42.

In this second embodiment, in a non-illustrated variant, the final gear reduction units GRU are optional and can be omitted.

The second embodiment, which has just been described, provides with compactness in the vehicle design since the engine units can be located under the rear seat(s).

Each engine unit output is dedicated to its associated continuous variable transmission unit that further drives the associated wheel.

Since this configuration has independent drive for each wheel 12, the vehicle has a low turning radius and shows no wheel dragging.

The power transfer to the rear wheels is controlled only by centrifugal clutches and reduction gears on each wheel.

There is no need for a mechanical differential connected to the rear driving wheels for sharing the rotational speed.

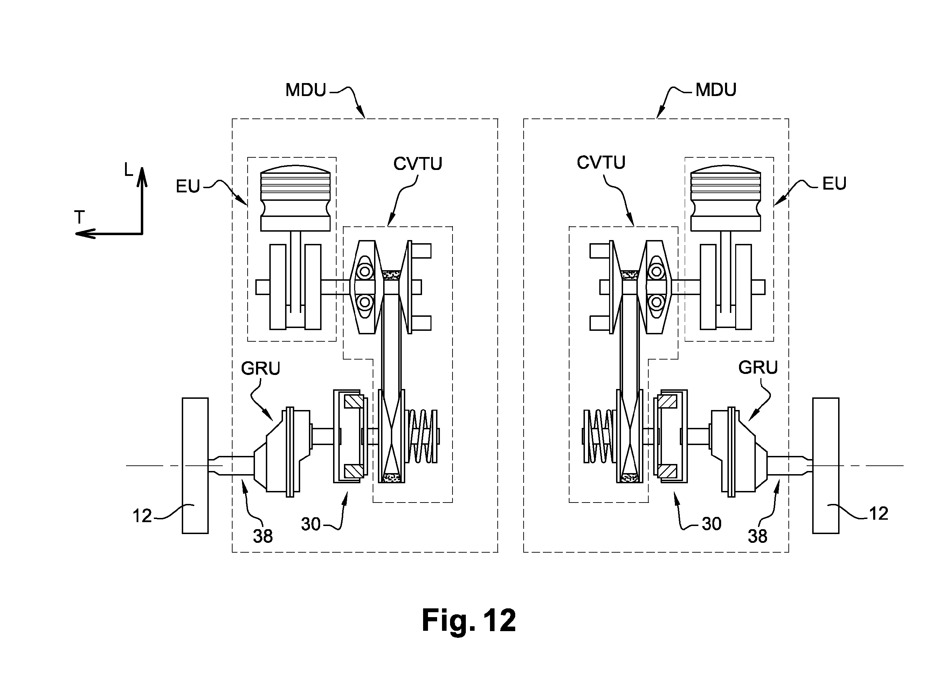

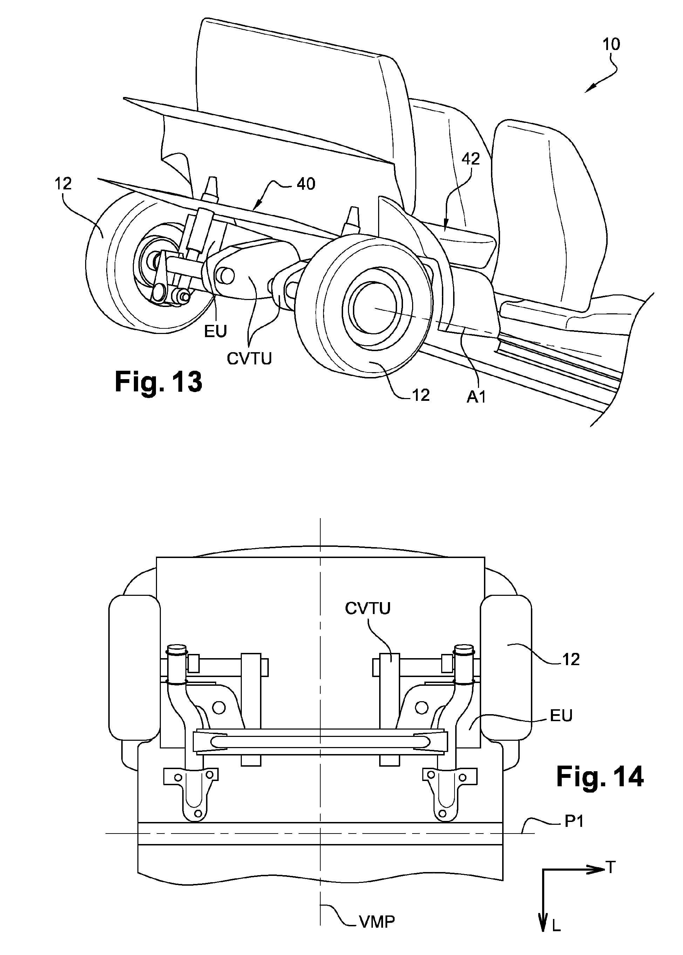

Third embodiment - Figures 12 to 15: Two independent motorized driving units, two laterally offset engine units, engine units arranged ahead of the geometrical transversal rotation axis of the rear wheels, two optional additional gear reduction units, continuous variable transmission units extending towards the front.

When comparing figure 12 with figure 8, it can be seen that the only important structural and design difference is the lateral offset arrangement of each unit EU with respect to the associated continuous variable transmission unit CVTU.

The continuous variable transmission unit input shaft 26 extends transversally from one side of the continuous variable transmission unit towards the engine unit EU and transversally towards the exterior in direction of the associated rear wheel.

The continuous variable transmission unit output shaft 28 extends transversally from the same side of the continuous variable transmission unit CVTU towards the associated wheel 12.

Due to this arrangement, the two continuous variable transmission units are adjacent and centrally located between the two engine units, i.e., each engine unit is transversally, laterally, arranged between the associated continuous variable transmission unit CVTU and the associated rear wheel 12.

Also, the two continuous variable transmission units CVTU extend longitudinally and forward.

The two engine units EU are thus positioned ahead of the geometrical transversal rotation axis A1 of the rear wheels 12 and the volume available transversally between the facing faces of the two continuous variable transmission unit CVTU is increased.

The two engine units are thus totally in front of the A1 axis and are arranged entirely under the rear seat cushion 42.

The axis A1 is positioned, in said rear space, rearward with respect to the previously defined vertical and transversal plane P4.

In this third embodiment, in a non-illustrated variant, the final gear reduction units GRU are optional and can be omitted.

The third embodiment, which has just been described, provides with compactness in the vehicle design since the engine units can be located under the rear seat(s).

Each engine unit output is dedicated to its associated continuous variable transmission unit, which further drives the associated wheel 12.

Since this configuration has independent drive for each wheel 12, the vehicle has a low turning radius and shows no wheel dragging.

The power transfer to the rear wheels is controlled only by centrifugal clutches and reduction gears on each wheel.

There is no need for a mechanical differential connected to the rear driving wheels for sharing the rotational speed.

This design provides with a low centre of gravity and a very good weight repartition.

If the engines of the engine units are, additional advantage can be provided by the compactness.

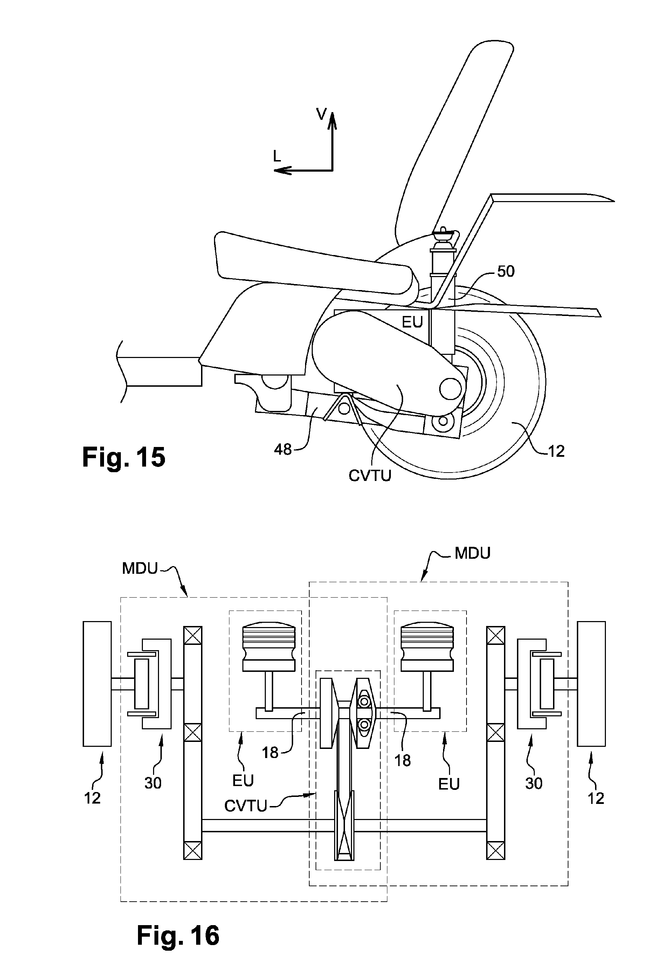

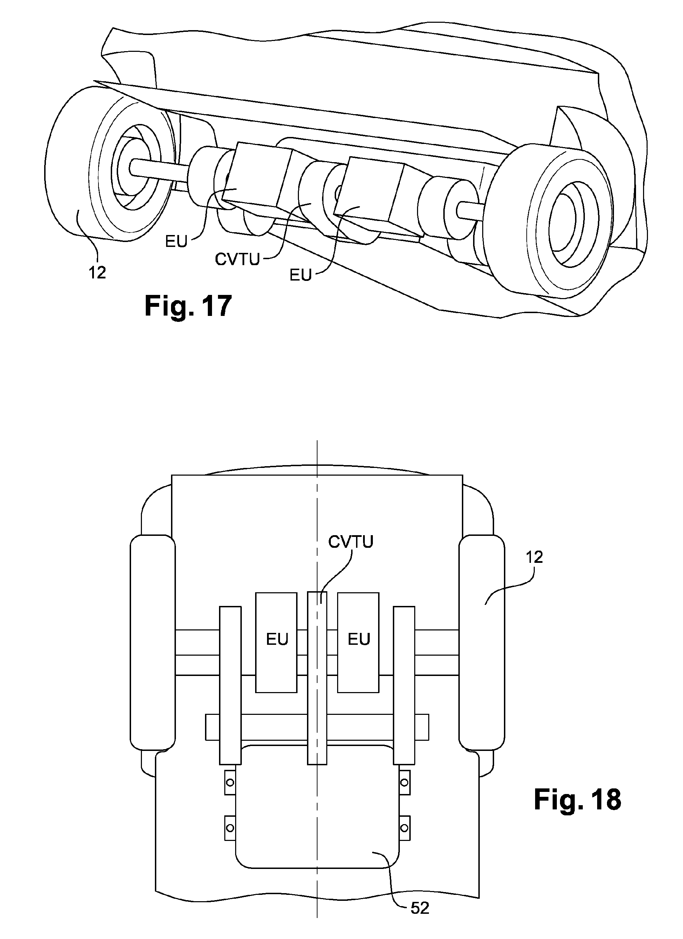

Fourth embodiment - Figures 16 to 19: Two motorized driving units having a common continuous variable transmission unit, two central engine units arranged laterally on each side of the common continuous variable transmission unit, engine units arranged behind of the geometrical transversal rotation axis of the rear wheels, two additional gear reduction units, continuous variable transmission units extending towards the front.

In this fourth embodiment, the single and common continuous variable transmission unit CVTU is arranged centrally between the two engine units EU.

Each engine unit output shaft 18 is rotatably connected to the input shaft 26 of the continuous variable transmission unit CVTU that, here, extends transversally on both sides of the continuous variable transmission unit CVTU.

In the same manner, the output shaft 26 of the continuous variable transmission unit CVTU here extends transversally on both sides of the continuous variable transmission unit CVTU.

Each lateral part of the output shaft 26 of the continuous variable transmission unit CVTU is the input shaft of an associated gear reduction unit GRU, which comprises two associated gear wheels.

Due to this provision of the gear reduction unit GRU, which comprises two associated gear wheels, the output shaft 31 of the clutch 30 is longitudinally very close to the common transversal geometrical axis of rotation A1 of the rear wheels 12 and its axis of rotation is substantially coaxial with the axis of rotation of the output shaft 18 of the engine unit EU.

The single and continuous variable transmission unit CVTU extends longitudinally and forwardly and the common transversal geometrical axis of rotation A1 of the rear wheels 12 passes through the engine units EU and is here substantially aligned with the rotation axis of the output shaft 18 of the engine unit EU.

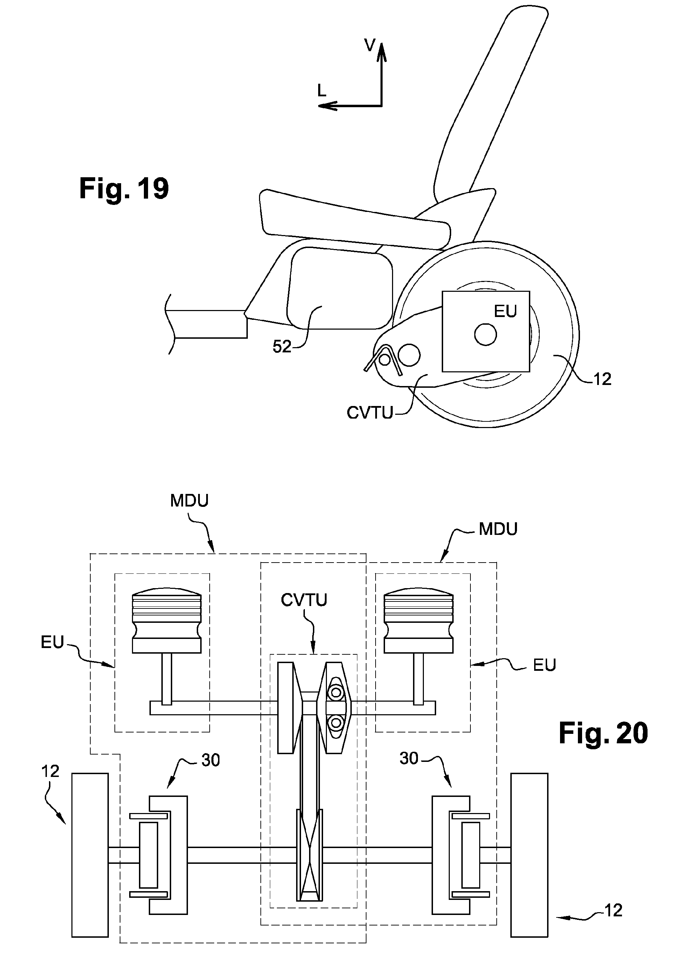

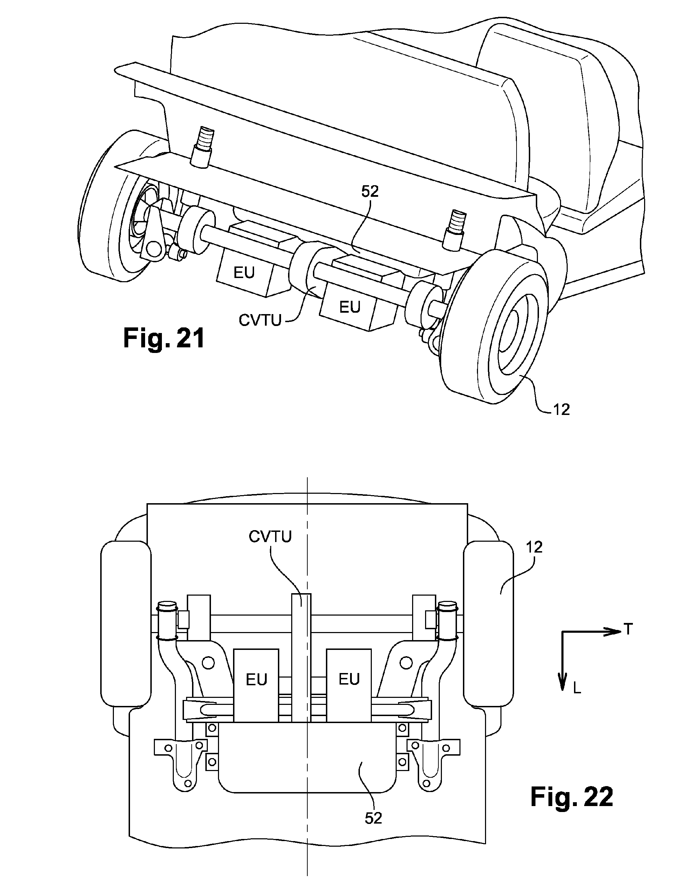

Figures 20 to 23 illustrate a variant of the fourth embodiment without reduction gear units resulting in the arrangement of the engine units ahead of the A1 axis.

When compared with the fourth embodiment, this variant is deprived of the additional two wheels gear reduction units.

Consequently, the two engine units EU are positioned ahead of the geometrical transversal rotation axis A1 of the rear wheels 12.

The fourth embodiment, and its variant, which has just been described provides with high compactness.

The centrifugal clutches are allowing speed variation between inner and outer rear wheels when turning.

The power transfer to the rear wheels is controlled only by centrifugal clutches and reduction gears on each wheel.

There is no need for a mechanical differential connected to the rear driving wheels for sharing the rotational speed.

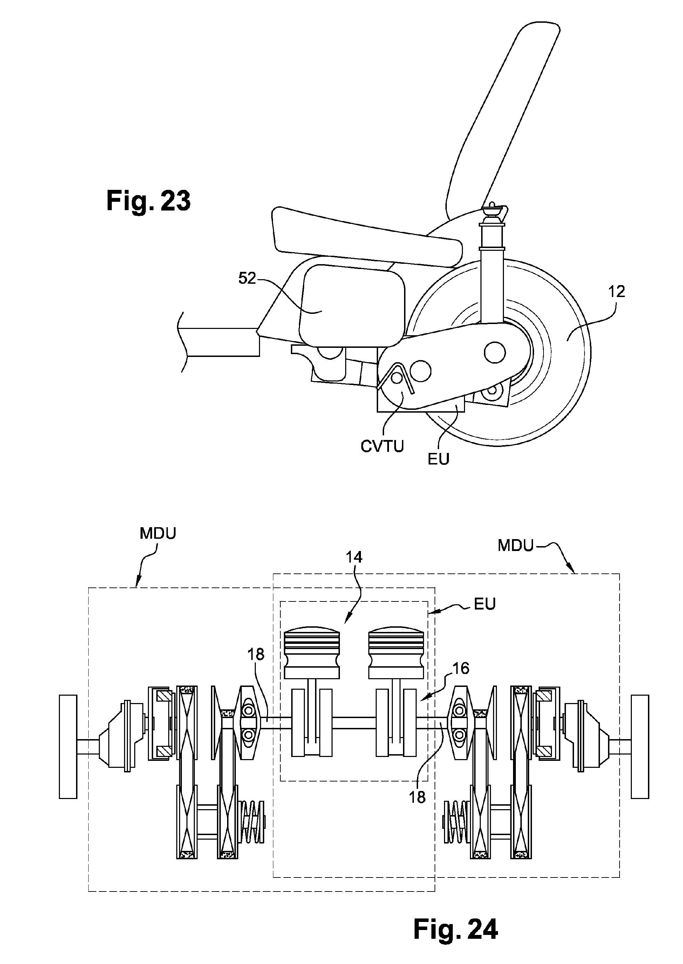

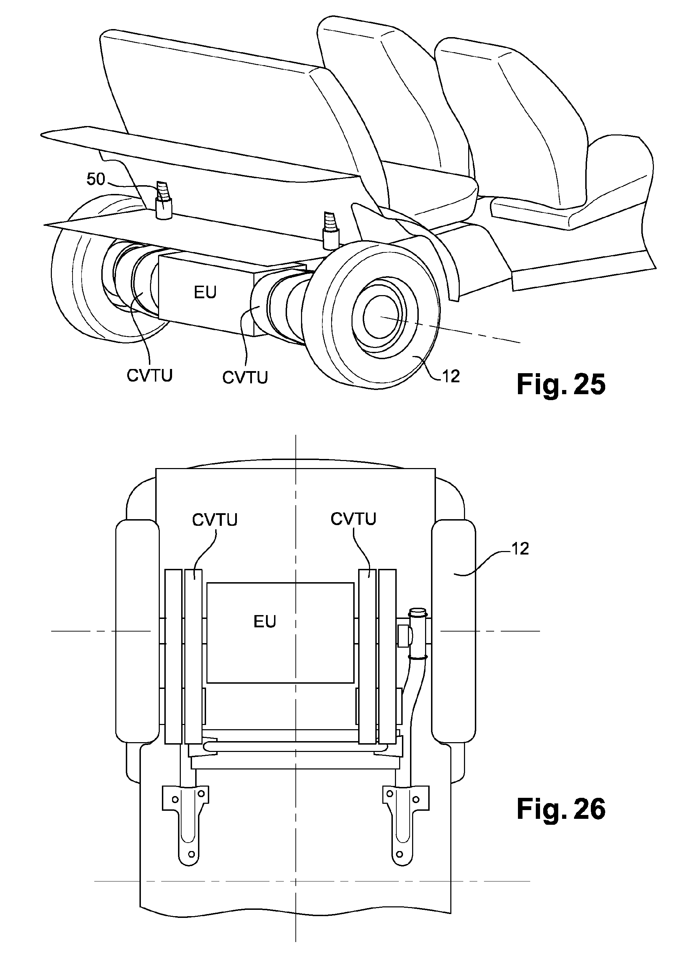

Fifth embodiment - Figures 24 to 27: Two independent motorized driving units having a common central engine unit, two lateral continuous variable transmission units arranged laterally on each side of the common engine unit, the geometrical transversal rotation axis of the rear wheels passes through the central common engine unit, two additional gear reduction units, continuous variable transmission units extending towards the front.

The description of this fifth embodiment can be made in comparison with the first embodiment illustrated in figures 1 to 4.

Using this comparison, the central common engine unit appears as the "grouping" of the two independent and central engine units EU of figure 1.

The common engine unit can thus comprise a multi-cylinders (here two cylinders in line) combustion engine having a common crankshaft, this crankshaft having two opposite axial ends which constitute two opposed output shafts, each one being rotatably connected to the input shaft 26 of the adjacent continuous variation transmission unit.

All the other geometrical arrangements of the various components are similar in the first and fifth embodiment, i.e. the relative positioning, laterally and longitudinally, of the various elements and components.

The final gear reduction units GRU are optional.

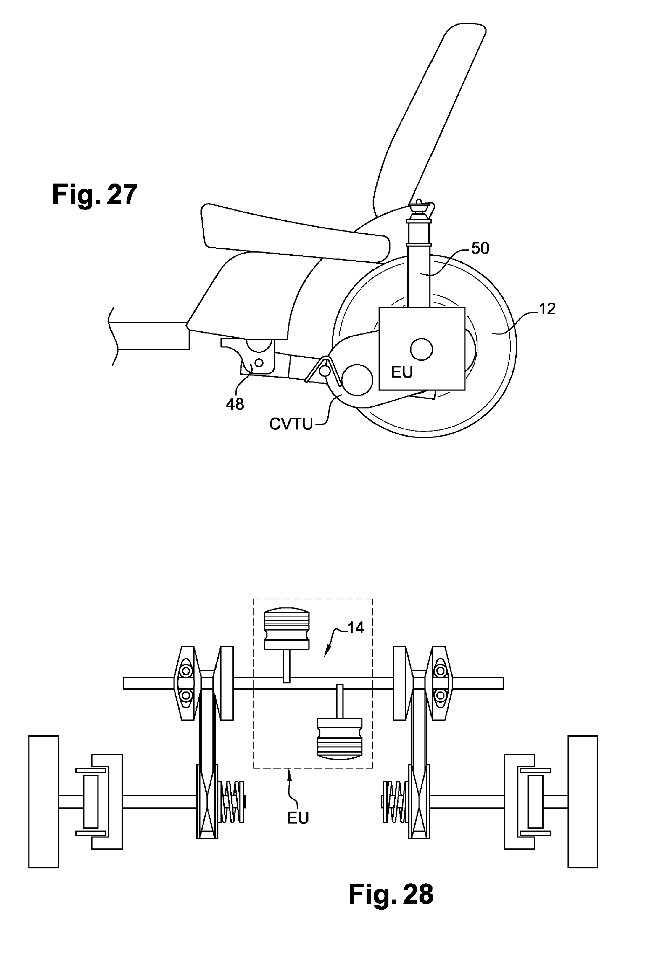

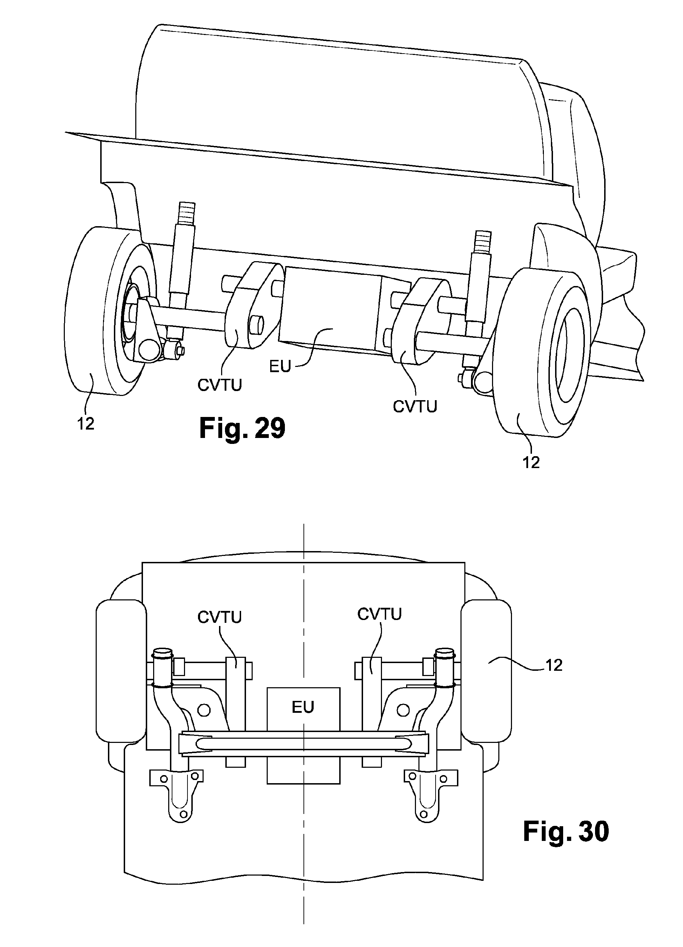

In the same manner, the variant of the fifth embodiment illustrated in figures 28 to 31, without any belt drive 32, is to be compared with the second embodiment illustrated in figures 8 to 11.

In this variant, the common central engine unit comprises a multi-cylinders combustion engine 14, which is for example a two opposed cylinders combustion engine (flat engine).

All the other geometrical arrangements of the various components are similar in the second embodiment and in this variant of the fifth embodiment, i.e. the relative positioning, laterally and longitudinally, of the various elements and components.

The fifth embodiment and its variant, which has just been described, provides with compactness in the vehicle design.

The design is more compact when the continuous variable transmission units CVTU can be located beneath the rear seat(s), thus reducing the total vehicle length.

The fixed ratio belt drive provides a slip-less and smooth reduction.

The manoeuvrability is easy.

The power transfer to the rear wheels is controlled only by centrifugal clutches and reduction gears on each wheel.

There is no need for a mechanical differential connected to the rear driving wheels for sharing the rotational speed.

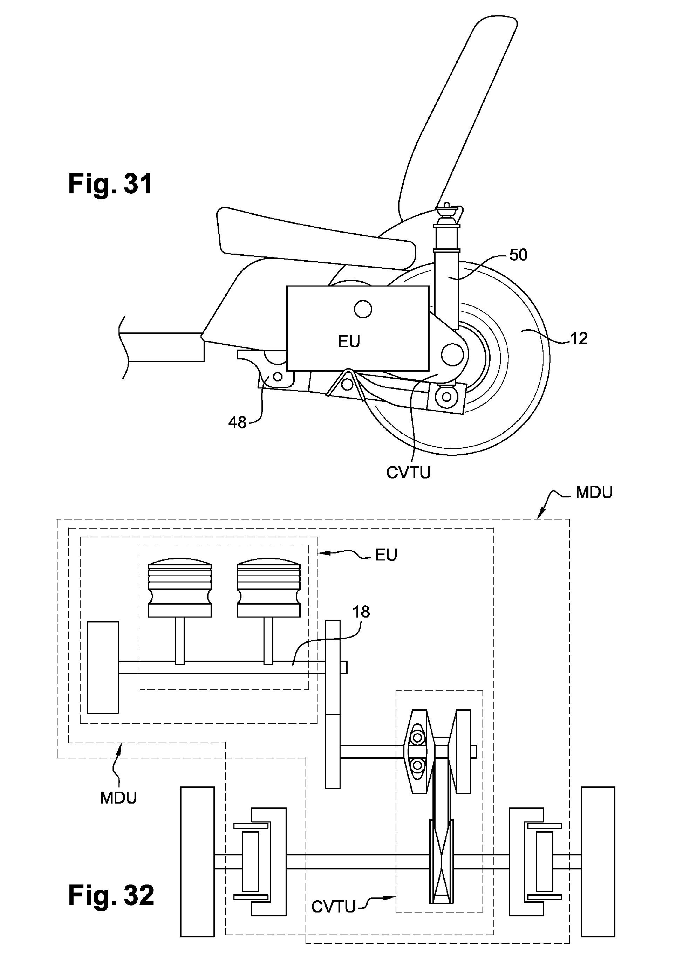

Sixth embodiment - Figures 32 to 35: Two motorized driving units having a single common engine unit, and a single common continuous variable transmission unit, the engine unit is located behind the geometrical transversal rotation axis of the rear wheels, continuous variable transmission unit extending towards the front.

In this sixth embodiment, the single engine unit EU which, together with the single continuous variable transmission unit CVTU, are common to the two motorized driving units and two clutches 30 are provided, one for each rear wheel 12.

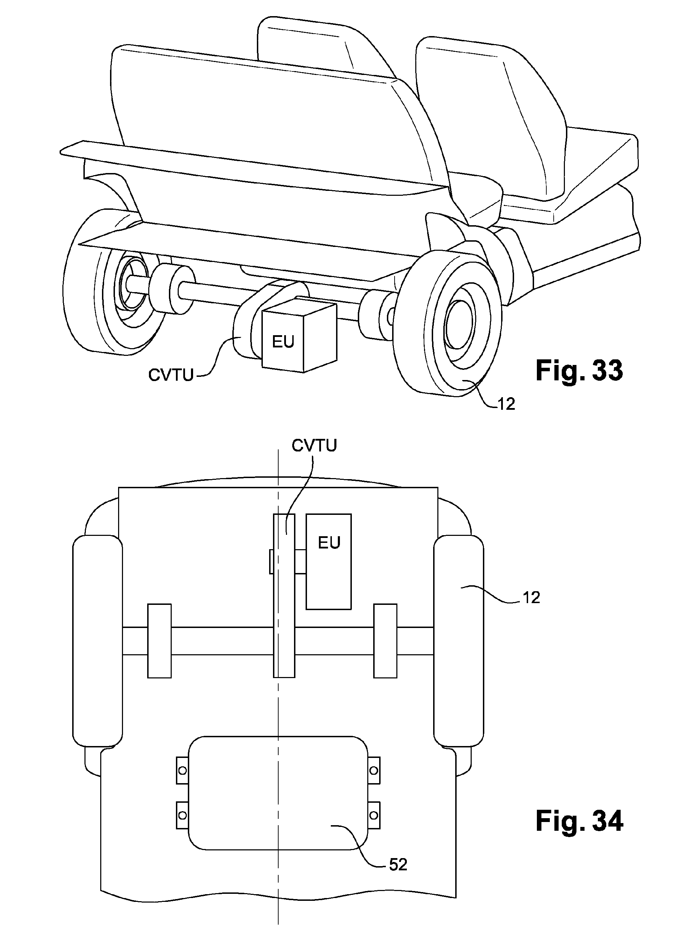

As it can be seen in figures 33 and 34, the two main units can be arranged somewhat adjacent and centrally.

The common engine unit EU comprises a multi-cylinders (here two cylinders in line) combustion engine 14 having a crankshaft 16. The crankshaft one axial end which constitutes the output shaft 18 which is connected to the input shaft 26 of the adjacent continuous variation transmission unit CVTU through some gear elements.

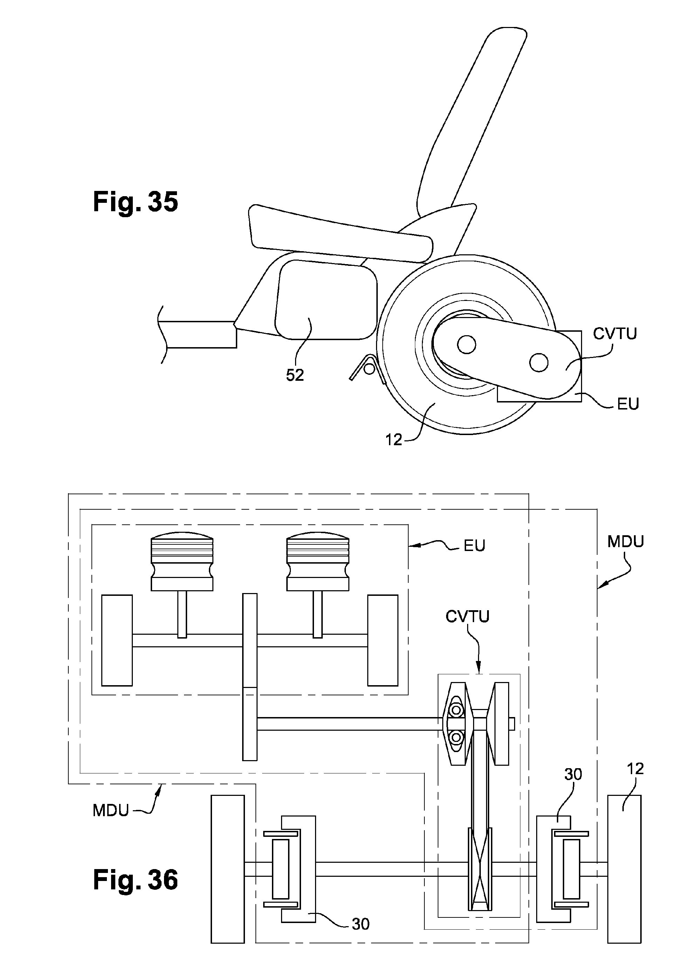

As it can be seen at figure 35, engine unit EU is arranged rearward, behind the axis A1, i.e. the engine unit EU is "behind the wheels".

The manoeuvrability is easy.

The clutches allow speed variation between the inner and outer rear wheels when turning.

Figure 36 illustrates a variant of the sixth embodiment of figure 32, the combustion engine 14 of which has a "central" power output on the crankshaft between the two cylinders.

The powertrain arrangements according to the invention allow to drive safely vehicles that are large, heavy and bulky without having to use any differential.

Further, these powertrain arrangements allow to drive safely such vehicles in driving conditions where the difference in rotational speed of the wheels is high.

In addition, each motorized driving unit can be operated independently, so that both wheels can be driven at different parameters.

Although, the invention has been described with continuous variable transmission units of a know belt type, or variable-diameter pulley, it should be apparent to the person skilled in the art, that other types of continuous variable transmission units could be used. The person skilled in the art can choose a CVT among a toroidal or roller-based type CVT, an Infinitely Variable Transmission (IVT) type CVT, a ratcheting type CVT, a hydrostatic type CVT, a Variable toothed wheel transmission type CVT, a cone type CVT, a radial roller type CVT and a traction-drive type CVT.

It will be apparent for the person skilled in the art, that when using some of the types of CVT listed above, such as a cone type CVT, he may not need to interpose a clutch between the continuously variable transmission unit output shaft and the associated rear wheel drive shaft.

Although, the invention has been depicted by way of example only with internal combustion engines as the engine units, it should be apparent that the engine units could comprise electrical engines.

Further, yet the invention has been disclosed in relation with continuous variable transmission units, it should be apparent that some other types of transmission could be used between the engine units and the wheels, such as robotised gear boxes working independently to each other.

## Claims

1. An automotive vehicle (10) moved by two transversally aligned rear wheels (12) both rotating around a common geometrical transversal axis of rotation (A1), each rear wheel (12) being driven by an associated motorized driving unit (MDU) rotatably connected to the associated rear wheel drive shaft, each motorized driving unit (MDU) comprising:
- an engine unit (EU) having an output rotating shaft (18);
- a continuously variable transmission unit (CVTU) having:
- a continuously variable transmission unit input shaft (26) rotatably connected to said engine unit output shaft (18), and
- a continuously variable transmission unit output shaft (28) rotatably connected to the associated rear wheel drive shaft (38).

2. A vehicle according to claim 1, **characterised in that** the continuously variable transmission unit (CVTU) is a belt (20) type continuously variable transmission unit which extends longitudinally.

3. A vehicle according to claim 2, **characterised in that** the continuously variable transmission unit output (28) and input (26) shafts of the continuously variable transmission unit (CVTU) both extend transversally, and both extend from the same side of the continuously variable transmission unit (CVTU) towards the associated rear wheel (12).

4. A vehicle according to claim 2, **characterised in that** the continuously variable transmission unit output (28) and input (26) shafts of the continuously variable transmission unit (CVTU) both extend transversally, and extend from opposite sides of the continuously variable transmission unit, respectively (28, 26) towards the associated rear wheel (12) and away from the associated rear wheel (12).

5. A vehicle according to claim 1, **characterized in that** a clutch (30) is interposed between the continuously variable transmission unit output shaft (28) and the associated rear wheel drive shaft (38).

6. A vehicle according to claim 5, **characterised in that** the clutch (30) is a centrifugal clutch.

7. A vehicle according to claim 1 , **characterised in that** said engine unit (EU) comprises a combustion engine, preferably a single cylinder combustion engine.

8. A vehicle according to claim 6, **characterised in that** the engine unit output shaft (18) rotates around a transversal axis.

9. A vehicle according to claim 1, **characterised in that** the motorized driving units (MDU) comprises a final additional gear reduction unit (RGU) which is interposed between the continuously variable transmission unit output shaft (28) and the associated rear wheel drive shaft (38).

10. A vehicle according to claim 1, **characterised in that** it comprises a single engine unit (EU) which is common to the two motorized driving units (MDU).

11. A vehicle according to claim 5, **characterised in that** it comprises a single a single clutch (30) which is common to the two motorized driving units (MDU).

12. A vehicle according to claim 1, **characterised in that** each motorized driving unit (MDU) is arranged in a rear space of the vehicle, between the rear wheels (12) of the vehicle, said rear space being delimited by a vertical and transversal front plane (P1), a vertical and rear plane (P2) that extends at the rear end of the vehicle, a horizontal upper plane (P3) and the ground plane (GP).

13. A vehicle according to claim 12, **characterised in that** the geometrical transversal rotation axis (A1) of the rear wheels (12) is positioned in said rear space of the vehicle.

14. A vehicle according to claim 13, **characterised in that** the geometrical transversal rotation axis (A1) of the rear wheels (12) is positioned, in said rear space, rearward with respect to a vertical and transversal plane (P4) that extends through the rear end (46) of a transversally extending seat (42).

15. A vehicle according to claim 1, **characterised in that** the engine unit (EU) is positioned longitudinally ahead of the geometrical transversal rotation axis (A1) of the rear wheels (12).

16. A vehicle according to claim 1, **characterised in that** the engine unit (EU) is positioned longitudinally behind of the geometrical transversal rotation axis (A1) of the rear wheels (12).

17. A vehicle according to claim 1, **characterised in that** the geometrical transversal rotation axis (A1) of the rear wheels (12) extends through the engine unit (EU).
